# EUROPEAN PATENT SPECIFICATION

(11) **EP 1 713 160 B1**
(45) Date of publication and mention of the grant of the patent: **17.06.2020**
(21) Application number: 06075746.5
(22) Date of filing: 30.03.2006
(51) Int. Cl.: H02K 7/116, H02K 11/225, H02K 11/215, H02K 11/38, E05F 15/603, E05F 15/646

(54) **Drive device for motor operated vehicle door with movement sensor**
Antriebsvorrichtung für eine motorisch verstellbare Kraftfahrzeugtür mit einem Bewegungsdetektor
Dispositif d'entraînement pour une porte de véhicule motorisée pourvu d'un détecteur de mouvement

(30) Priority: 11.04.2005 US 670171 P
(43) Date of publication of application: 18.10.2006
(73) Proprietor: Delphi Technologies, Inc., Troy, MI 48007 (US)
(72) Inventor: Haag, Ronald H., Lake Orion, MI 48360 (US); Johnson, Joseph M., Huntington Woods, MI 48070 (US); Orr, Brian N., Chesterfield, MI 48051 (US)
(74) Representative: Manitz Finsterwald Patent- und Rechtsanwaltspartnerschaft mbB

(56) References cited:
- WO-A1-2004/025063
- US-A- 4 984 668
- US-A- 5 046 283
- US-A- 6 043 644
- US-A1- 2004 256 881
- US-B1- 6 408 573

## Description

### TECHNICAL FIELD

The present invention relates to an apparatus for providing a driving mechanism for a vehicle door. More particularly, the present invention relates to a driving mechanism with a sensor assembly for providing a signal indicative of movement of the vehicle door.

### BACKGROUND OF THE INVENTION

A typical vehicle is manufactured with a plurality of openable doors. Each door is typically mounted on hinges within a door opening. Some larger vehicles have sliding doors that slide from an open position to closed position thus, egress and ingress of the vehicle is possible without requiring a large open area beside the vehicle to allow for pivoting of the door. This is particularly useful in parking lots where the area between the vehicles is typically not large enough to allow for full pivoting of the opening doors. Moreover, such sliding doors also allow the vehicles to have larger door openings.

Accordingly, sliding doors provide access to large door openings without requiring a large area adjacent to the vehicle which would be required for a door that pivots on its hinge. In one configuration, a power sliding door is supported and guided by an upper track, a center track and a lower track. An upper roller is attached to the power sliding door and travels in the upper track. A lower roller is attached to a lower portion of the sliding door and runs or travels in the lower track. A hinge and roller assembly is pivotally attached to a rear portion (e.g., towards the rear of the vehicle) of the door between the upper and lower portions of the door. The hinge and roller assembly is also received in the track to allow for sliding or movement of the door.

In other applications, lift gates are provided for access to the rear portion of the vehicle so that items may be stowed in the back of the vehicle.

In addition to the usage of sliding doors and lift gates in vehicles, power drive systems have been implemented wherein automatic opening, closing, locking and unlocking of the sliding door or lift gate is facilitated through a drive system coupled to the sliding door. For example, drive systems for sliding door applications are known from, US 5,046,283 A and WO 2004/025063 A1. Here, a rotational movement of a driving device may be coupled to a rotational gear used for powered movement of the vehicle door by using an electromagnetic clutch, as is known from US 4,984,668 A. Furthermore, a motor drive unit according to the preamble of claim 1 is known from US 6,408,573 B1.

Presently, some sliding doors are driven through cables attached to the forward and aft sides of the center roller hinge (e.g., a hinge mounted towards the center of the door with respect to the upper and lower edges of the same). With regard to lift gates the same are driven by cables, chains, belts or other equivalent items capable of providing the driving force for movement of the lift gate from a closed position to an open position and back to a closed position.

In addition to the power driving system, a control system is necessary to operate the power drive system and one necessary aspect of the control system is that movement and position of the sliding door or lift gate must be tracked or known to the logic of the control system. An opening and closing control system for an opening-closing member of a vehicle is known from US 2004/0256881 A1, for instance. In order to determine the movement and position of the sliding door or lift gate a sensor can be coupled to any one of the components that is driven (e.g., moved by the power driving system). Especially, a rotational movement may be detected by a magnetic field variation sensor known from US 6,043,644 A.

Accordingly, it is an object of the invention to provide an apparatus and method for determining the movement of a vehicle door by a motor driven device. In addition, it is an object of the invention to provide an apparatus and method for determining the movement of a vehicle door, wherein the same is capable of determining very small movement of the vehicle door. Furthermore, it is an object of the invention to provide a compact motor drive unit that is capable of being installed in small areas of the vehicle.

### SUMMARY OF THE INVENTION

The above objects are satisfied by a motor drive unit according to claim 1.

A motor drive unit for a vehicle door comprises: a motor having a driving member; a housing having a shaft rotatably received therein; an input member being rotatably received upon the shaft, the input member being operatively associated with the driving member, wherein rotation of the driving member causes rotation of the input member; an armature mounted on the input member; a rotor fixedly secured to the shaft, the rotor being cylindrical in shape and has a plurality of teeth positioned along the periphery of the rotor, the teeth being positioned in an equidistant manner; a coil mounted to the housing, the coil providing magnetic flux lines through the rotor to attract the armature when the coil is energized; and a sensor assembly mounted to the housing in a facing spaced relationship with respect to the plurality of teeth of the rotor, wherein rotational speed and direction of the rotor is detected by the sensor assembly.

A motor drive unit for a vehicle door comprises: a motor having a driving member; a housing having a first shaft rotatably received therein; an input member being rotatably received upon the first shaft, the input member being operatively associated with the driving member, wherein rotation of the driving member causes rotation of the input member; an armature mounted on the input member; a rotor fixedly secured to the first shaft, the rotor being cylindrical in shape and has a plurality of teeth positioned along the periphery of the rotor, the teeth being positioned in an equidistant manner; a coil mounted to the housing, the coil providing magnetic flux lines through the rotor to attract the armature when the coil is energized thereby coupling the input member to the rotor, wherein the magnetic flux lines travel through a portion of the rotor and the armature but not through the plurality of teeth of the rotor; an inductance sensor assembly mounted to the housing in a facing spaced relationship with respect to the plurality of teeth of the rotor, wherein rotational speed and direction of the rotor is detected by the inductance sensor assembly as the plurality of teeth of the rotor pass by the inductance sensor assembly, and a second shaft comprising a first gear and a second gear mounted to the second shaft, with the second gear directly engaging the input member and the first gear being directly driven by a worm gear of the motor, wherein a worm drive of the motor is centrally located within a height profile of the motor drive unit.

A motor drive unit for a vehicle door according to another embodiment comprises: a motor having a driving member; a housing having a shaft rotatably received therein; an input member being rotatably received upon the shaft, the input member being operatively associated with the driving member, wherein rotation of the driving member causes rotation of the input member; an armature mounted on the input member; a rotor fixedly secured to the shaft, the rotor being cylindrical in shape and has a plurality of teeth positioned along the periphery of the rotor, the teeth being positioned in an equidistant manner; a coil mounted to the housing, the coil providing magnetic flux lines through the rotor to attract the armature when the coil is energized thereby coupling the input member to the rotor; and a hall effect device mounted to the housing in a facing spaced relationship with respect to the plurality of teeth of the rotor, wherein the hall effect device comprises a magnet and an integrated circuit, wherein rotational speed and direction of the rotor is detected by the hall effect device as the plurality of teeth of the rotor pass by the hall effect device.

A modular drive assembly for a sliding door, comprising: the motor drive unit; a guide track having a hinge assembly slidably received therein; a pair of pulleys disposed on either end of said guide track, said pair of pulleys being disposed adjacent to a path of travel of said hinge assembly within said guide track, said path of travel being defined by a closed door limit and an open door limit; and a pair of cables each having an end that is secured to said hinge assembly and the other end is secured to a cable drum of the motor drive unit mounted to said guide track, said motor drive unit being configured to rotate said cable drum, wherein said cable drum is also capable of freely rotating within said motor drive unit when said motor drive unit is not rotating said cable drum, wherein rotation of said cable drum causes said hinge assembly to move in said guide track as one of said cables wraps onto said cable drum while the other one of said cables wraps off of said cable drum, wherein said hinge assembly passes a portion of one of said pair of pulleys when said hinge assembly is at said closed door limit and said hinge assembly passes a portion of the other one of said pair of pulleys when said hinge assembly is at said open door limit, wherein the motor drive unit comprises: a motor having a driving member; a housing having a shaft rotatably received therein, the motor being mounted to the housing; an input member being rotatably received upon the shaft, the input member being operatively associated with the driving member, wherein rotation of the driving member causes rotation of the input member; an armature mounted on the input member; a rotor fixedly secured to the shaft, the rotor being cylindrical in shape and has a plurality of teeth positioned along the periphery of the rotor, the teeth being positioned in an equidistant manner; a coil mounted to the housing, the coil providing magnetic flux lines through the rotor to attract the armature when the coil is energized thereby coupling the input member to the rotor; an inductance sensor assembly mounted to the housing in a facing spaced relationship with respect to the plurality of teeth of the rotor, wherein rotational speed and direction of the rotor is detected by the inductance sensor assembly as the plurality of teeth of the rotor pass by the inductance sensor assembly; and the cable drum is fixedly secured to the shaft, wherein rotation of the cable drum by a force other than the motor will cause rotation of the rotor when the coil is not energized and rotational speed and direction of the rotor is detected by the inductance sensor assembly as the plurality of teeth of the rotor pass by the inductance sensor assembly.

### BRIEF DESCRIPTION OF THE DRAWINGS

Figure 1 is a perspective view of a vehicle with a sliding door and a lift gate;
Figure 2 is a perspective view of a door track and a motor drive unit for driving a sliding door of a vehicle;
Figure 3 is a view along lines 3-3 of Figure 2;
Figure 4 is a schematic diagram of inductance sensor assembly;
Figures 5A and 5B illustrate the eddy currents generated in the inductance sensor assembly as rotor teeth pass by;
Figures 6-6C illustrate a rotor constructed in accordance with exemplary embodiments of the present invention;
Figures 7 and 8 illustrate the output signals of the inductance sensor assembly;
Figures 9A and 9B are perspective views of a housing for the inductance sensor assembly;
Figure 10 is cross-sectional view of an alternative motor drive unit for use in power sliding door or lift gate applications;
Figure 11 is top plan view of a motor drive unit constructed in accordance with an exemplary embodiment of the present invention;
Figure 12 is a view along lines 12-12 of Figure 11; and
Figure 13 is a view along lines 13-13 of Figure 11.

### DESCRIPTION OF THE PREFERRED EMBODIMENTS

Exemplary embodiments of the present invention relate to an apparatus and method for providing a compact drive device for use in vehicular applications. In one exemplary embodiment, the drive device is contemplated for providing a driving force to at least one driving cable of a sliding door of a vehicle. In another exemplary embodiment, the drive device is contemplated for providing a driving force to at least one driving member of a lift gate of a vehicle.

Prior apparatus and methods for providing and/or effectuating moving of a sliding door of a vehicle are found in United States Patent Nos. 5,046,283; 5,319,880; 5,319,881 and 5,323,570 and United States Patent Applications Serial Nos. 10/798,733 (US 2004 0221 511 A1) and 10/798,792 (US 2004 0216 383 A1) both filed March 11,2004.

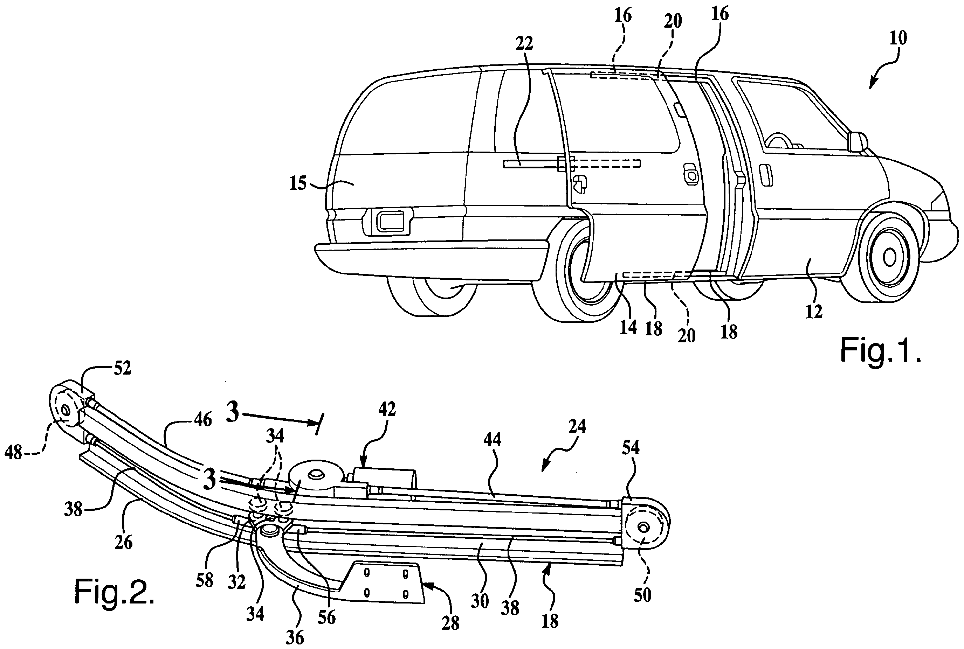

Referring now to Figure 1, a vehicle 10 with a front pivoting door 12 and a power sliding door 14 is illustrated. Vehicle 10 also comprises a lift gate 15. Here and in a non-limiting embodiment, power sliding door 14 is guided by rollers that are slidably received in an upper track 16 and a lower track 18. The rollers 20 are configured to be received in upper track 16 and lower track 18. In addition to upper track 16 and lower track 18, and in accordance with an exemplary embodiment, a center track 22 is also provided. Center track 22 is also configured to receive and engage a roller 20 that is coupled to sliding door 14. Of course, exemplary embodiments of the present invention are contemplated for use with other sliding door configurations.

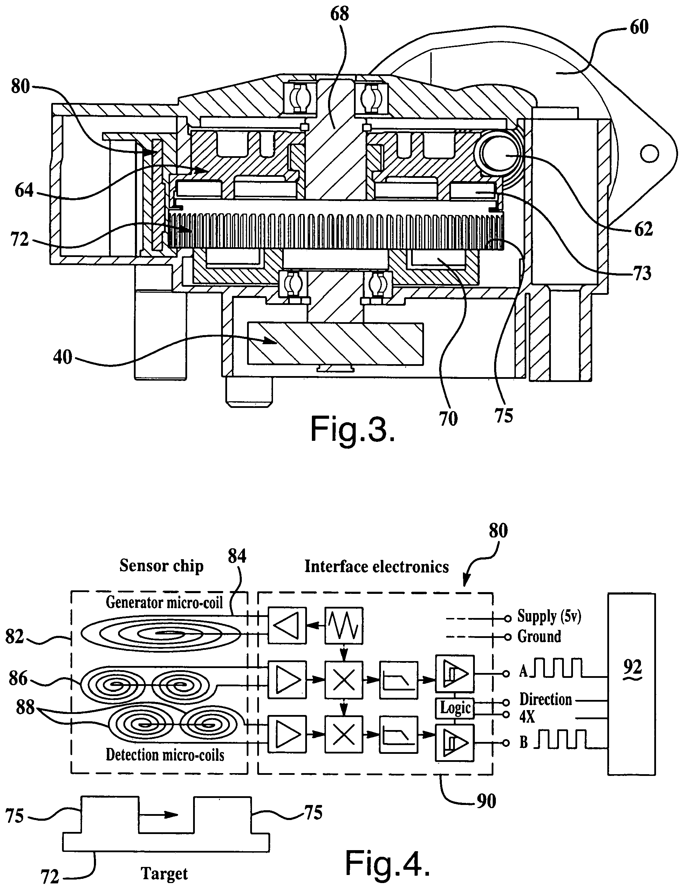

Referring now to Figures 2 and 3, a modular power sliding door system (also referred to as modular drive assembly 24) is illustrated. As illustrated, the modular drive assembly 24 is provided wherein all the drive components are attached to a lower sliding door track and the system is easily installed as a single unit. As shown, modular drive assembly 24 comprises a door track 26 for defining a path of travel for the sliding door. The path of travel defines an open position of the door and a closed position of the door. In accordance with an exemplary embodiment the modular drive assembly 24 is a cable drive system wherein cables are manipulated to drive a hinge or hinge assembly 28 which is secured to the sliding door.

Door track 26 defines a channel 30 for slidably receiving a portion 32 or lower roller hinge 28. Door track 26 can be manufactured out of a steel stamping of any equivalent thereof wherein the curvature of the track is easily defined as well as the configuration of the channel. The door track is configured to be installed as a complete unit into the vehicle, which in accordance with one exemplary embodiment will be installed within a cavity of a lower portion of a vehicle defined by a vehicle rocker panel.

One method or means for allowing portion 32 to be slidably received within channel 30 is to provide rollers 34, which will allow hinge 28 to slide therein. Also, portion 32 is pivotally secured to a mounting portion 36 of hinge 28. The pivotal securement of portions 32 and 36 will allow for the proper movement of the sliding door as it moves along the contour of track 26, which is configured to match the contour of the vehicle. It is, of course, understood that the hinge 28 may comprise a single unit with the pivotal movement being facilitated by the securement of one end to the door and the other end to the track.

In an exemplary embodiment, a pair of cables 38 are secured to hinge 28. One cable 38 is secured to a forward side of the hinge and the other is secured to the rearward side of the hinge and the other ends of the cables are each secured to a single drum or output member 40 of a motor drive unit 42. The cables are attached to either side of the drum such that while one cable raps off the drum the other will rap on. Alternatively, drum 40 may comprise two drums that are secured to each other by a spring biasing means in order to provide tension to cables 38 as the hinge assembly travels within the guide track. In yet another alternative embodiment, drum 40 is configured to have drums of varying dimensions or diameters wherein a smaller diameter portion is used to provide a greater torque to the cable. The smaller diameter is contemplated for used during the closing or latching portion of door travel wherein higher forces are preferred.

The cables also pass through conduits 44 and 46. Conduits 44 and 46 extend out from the housing of motor drive unit 42 in opposite directions. Conduits 44 and 46 provide a means for protecting the cables from being damaged or interfered with as they wrap onto and off of cable drum 40. Disposed at either end of the track is a pair of cable pulleys 48 and 50. Pulleys 48 and 50 are rotatably mounted to the ends of track 26. Pulleys 48 and 50 allow the cable to transition from the conduit into the channels of track 26 and ultimately to the tensioners or alternatively the cables are directly secured to a portion of hinge 28. In yet another alternative and in lieu of spring tensioners 56 and 58 either, or both pulleys 48 and 50 can be secured to the guide track by a member movably connected to the guide track wherein a biasing member applies a biasing force to the pulley or the member the pulley is mounted to as the hinge assembly transitions through the guide track. The cables extend out to either side of the lower roller hinge where they are attached to the same through spring tensioners 56 and 58. An intended purpose of tensioners 56 and 58 is to allow for the carrying length of cable needed throughout the sliding door's travel, especially through the bend in the track (e.g., the bend portion of the track necessary to transition the sliding door into its fully closed position). The purpose of the tensioners is to allow for a varying length of cable needed throughout the sliding door's travel, especially through the bend in the track where increased forces may be required to pull the door into a locked position. Pulleys 48 and 50 are disposed within pulley housings 52 and 54, respectively. Housings 52 and 54 enclose and protect the pulleys and the cable from debris and contaminates that may affect performance of the same (e.g., increase resistance or cause undesirable noise or vibrations).

Accordingly, the cable pulleys provide a means for guiding and completing the cable loop which causes the desired movement of the hinge. As discussed above, the movement of the hinge is facilitated by winding one of the cables onto the cable drum while allowing the other cable to unwind therefrom thus, allowing the hinge to slide within the track.

Motor drive unit 42 provides the necessary driving force for the modular drive assembly 24. More particularly, motor drive unit 42 provides the force for rotating cable drum 40 in order to effect the desired movement of hinge 28 and ultimately sliding door 14. In accordance with an exemplary embodiment motor drive unit 42 is configured to have a height profile not greater than the height profile of the modular drive assembly 24 or track 26. Thus, the exemplary embodiment disclosed herein requires no additional vehicle space as would be required for only track 26 and the hinge disposed therein. Moreover, modular drive assembly 24 is easily installed in its operative location, as the height of the system is the same as a receiving cavity planned for use of track 26. This is accomplished by providing a compact motor drive unit that is capable of generating the required torque or force to rotate cable drum 40. However, it is also contemplated in applications where there is additional room for installation of the modular drive assembly 24, the motor drive unit housing may be slightly larger than the guide track. In order to reduce the profile of the motor drive unit, a sensor assembly that is used for monitoring the position, speed and direction of the vehicle door is internally incorporated into the housing to reduce the profile of the unit. However, and since it is desirable to provide a low profile housing there is not a lot of room in the internal cavity of the housing thus, is desirable to provide a small sensor assembly that provides an accurate output.

Referring now to Figure 3, an exemplary embodiment of the motor drive unit is illustrated. As illustrated, motor drive unit 42 comprises a motor 60 for driving a shaft having a worm gear 62. Worm gear 62 is configured to threadingly engage a gear or input member 64. Gear 64 is rotatably mounted upon a shaft 68 rotatably received within an internal cavity defined by the housing of the motor drive unit. Thus, gear 64 is capable of rotational movement about shaft 68. In accordance with an exemplary embodiment, shaft 68 is rotatably received in the housing by for example a pair of bearing arrangements, wherein shaft 68 is perpendicularly positioned with respect to the driving member or shaft of the motor comprising a worm gear configured for engaging gear 64. Of course, other (non-perpendicular) angular configurations between gear 64 and shaft 68 are contemplated.

The motor drive unit further comprises an electromagnetic clutch for coupling and uncoupling gear or input member 64 to shaft 68 via a rotor fixedly secured to the shaft wherein the electromagnetic clutch is activated for powered movement of the vehicle door. Thus, once gear 64 is electromagnetically coupled to the rotor, rotation of gear 64 causes rotation of shaft 68 and when the gear is no longer secured or electromagnetically coupled to the rotor gear 64 can rotate freely about shaft 68. In other words, when the electromagnetic clutch is not engaged the rotor and the shaft can freely rotate while gear 64 remains stationary. As is known in the related arts an electromagnetic clutch comprises a stationary coil 70 for generating an electromagnetic field in order to couple or uncouple a first frictional surface or rotor 72 to another frictional surface or armature or other equivalent item 73. Accordingly, motor drive unit 42 provides electro/mechanical transmission of torque via mechanical engagement, which is facilitated through an excitation that is provided to the coil. In order to actuate the clutch a voltage/current is applied to the coil, wherein the coil becomes an electromagnet and produces magnetic lines of flux. The flux is then transferred through a small air gap between the coil and a rotor. A portion of the rotor becomes magnetized and sets up a magnetic loop that attracts an armature wherein a frictional force is applied at contact. In accordance with an exemplary embodiment, the coil, the rotor and the armature are configured such that the magnetic lines of flux do not pass through the teeth of the rotor disposed about the periphery of the rotor.

As shown, and in accordance with an exemplary embodiment, rotor 72 is fixedly secured to the shaft and armature 73 is fixedly secured to gear 64, which rotates freely about shaft 68. Thus, rotation of shaft 68 without the coil being energized will cause rotation of rotor 72 and output gear or cable drum 40 while gear 64 and armature 73 are rotatably mounted upon shaft 68. Accordingly, shaft 68 is capable of being driven by rotation of drum 40 (e.g., sliding of the door or pivoting of the lift gate) when the coil is not energized and the armature of gear 64 is not engaging rotor 72.

Accordingly, motor 60 will drive or rotate gear 64 and the cable drum will not be rotated by the motor until the coil is energized and the electromagnetic field or magnetic flux generated by coil 70 draws armature 73 towards rotor 72 as is known in the related arts. Thus, when the electromagnetic clutch is engaged the door can be powered open or closed by motor 60. When the clutch is released or the electromagnetic clutch is not engaged the door can be moved freely because the cable drum is allowed to move freely as there will be no frictional engagement between the two friction plates. Operation of the motor and the electromagnetic clutch to open and close the vehicle sliding door is facilitated by a controller in operable communication with the necessary components of the motor drive unit.

Although not specifically shown it is contemplated that motor drive unit 42 can be used to open and close a vehicle lift gate.
In addition and in an exemplary embodiment, rotor 72 further comprises a plurality of teeth 75 disposed about the periphery of the rotor. Teeth 75 are configured to provide a means for determining the speed and direction of rotation of the rotor as an inductive sensor assembly 80 is secured to the housing in a facing spaced relationship with respect to teeth 75 of rotor 72. The direction of rotation of the rotor and its speed is used to determine the movement and position of the vehicle door coupled to the rotor via shaft 68, output member or cable drum 40, cables 38 and the hinge assembly. In addition, sensor assembly 80 can also be used to determine if an obstacle is preventing movement of the vehicle door. Sensor assembly 80 will provide signals indicative of movement of rotor 72, which may be attributable to manual movement of the door or powered movement of the door by the motor when the electromagnetic clutch is engaged. This is due to the fact that the rotor will rotate in either the manual or power mode and gear 64 is rotationally mounted about shaft 68. Movement, direction and speed of the door is determined by monitoring the movement of the rotor, wherein signals indicative of rotor movement and speed are inputted into a control algorithm comprising logic for converting the rotor movement and speed into vehicle door movement, location and speed. Sensor assembly 80 is used to determine the position, speed and direction of the vehicle door, wherein the sensor assembly provides two output channels, which is commonly called a quadrature output type sensor. The signals indicative of rotor movement and speed are provided to a controller or system having a microprocessor, microcontroller or other equivalent processing device capable of executing commands of computer readable data or program for executing a control algorithm. In order to perform the prescribed functions and desired processing, as well as the computations therefore (e.g., determining the movement, direction and speed of the vehicle door as well as operating the electromagnetic clutch and the motor), the controller may include, but not be limited to, a processor(s), computer(s), memory, storage, register(s), timing, interrupt(s), communication interfaces, and input/output signal interfaces, as well as combinations comprising at least one of the foregoing. For example, the controller may include input signal filtering to enable accurate sampling and conversion or acquisitions of such signals from communications interfaces. As described above, exemplary embodiments of the present invention can be implemented through computer-implemented processes and apparatuses for practicing those processes. Movement, direction and speed of the door is important as most power sliding door systems or power lift gates are operated by a control system wherein various inputs are required for proper operation.

Referring now to Figures 3 and 4, and in accordance with an exemplary embodiment, sensor assembly 80 is an inductance type of sensor assembly comprising a sensor chip 82, which is positioned to provide signals to a control module as the teeth of the rotor rotate or move past the sensor chip. Disposed on the sensor chip are a generator coil 84 and two pairs of detection coils 86 and 88. Alternatively, a single generator coil and one pair of detection coils can be used. The detection coils are connected in a differential arrangement to reject a common mode signal. The sensor also comprises an electronic interface 90, which comprises an excitation for the generator coil and two read outs A and B. The excitation generates an AC magnetic field at a frequency of several hundred kHz. Accordingly, an AC voltage is induced in the sensing coils by the magnetic field of the excitation coil. As illustrated, a differential arrangement of two sensor coils is provided to eliminate common mode disturbances. Electronic interface 90 provides a dedicated application specific integrated circuit (ASIC) or printed circuit board for generating the excitation current, amplifying the measured voltages, and demodulation of the signal, wherein the signal is presented in an analog or digital format. The readout electronics of the ASIC of the electronic interface will extract the amplitude variation of the high frequency signal due to the presence of a metallic target passing by the detection coils (e.g., the teeth of the rotor) which disturbs or redirects the fields generated by the generation coil and the detection coils. Thus, the generated magnetic field is amplitude-modulated by the movement of the metal teeth of the rotor. In accordance with an exemplary embodiment four sensing coils are connected in differential pairs to pick up the modulated field and provide signals to a corresponding circuit. In one embodiment, the output stage of the electronic interface is a 1^{st} order low-pass filter and a comparator. Accordingly, rotation of the teeth of the rotor is sensed and signals are provided to a controller 92. In accordance with one non-limiting exemplary embodiment the plurality of output signals have a periodicity identical to the plurality of teeth of the rotor and the phase difference between the channels of the sensor assembly is defined by the ratio of width between two rising edges over the cycle width. The use of this type of inductance sensor assembly negates the need for a permanent magnet, which allows for design flexibility and improves resolution or accuracy of the sensing device.

In accordance with an exemplary embodiment, the sensor face operates when it is in a facing spaced relationship with respect to the rotating teeth of the rotor. Exemplary distances are found in the range defined by 0.1 mm - 0.9mm, with an optimum distance of 0.5 mm. Of course, distances greater or less than the aforementioned values are contemplated to be within the scope of the present invention.

An example of sensor assembly 80 is a digital inductive position, speed and direction sensor PO1210 that is currently available from Posic. Additional information on the sensor assembly of Posic is found at their website http://www.posic.ch. In addition, U.S. Patent No. 6,043,644 provides further details of the inductance sensor assembly intended for use with exemplary embodiments of the present invention.

As described in the Posic literature and U.S. Patent No. 6,043,644 and in accordance with an exemplary embodiment, the generator and detection coils are separate planar coils (e.g., a flat coil whose thickness is small with respect to the other dimensions) formed from a spiral conductor wherein the conductor is deposited on a silicon substrate by any suitable means. The generator or primary coil generates a first magnetic field covering, at least, the surface of a notch and a tooth of the rotor. The detection or secondary coils pick up the magnetic field induced by the generator coil. In accordance with an exemplary embodiment the detection coils are disposed between the teeth of the rotor and the generator coil. In accordance with an exemplary embodiment, the detection coils are smaller than the generator coil and each of the detection coils covers a surface corresponding to the surface of a tooth or a notch only and each detection coil picks up a part of the magnetic field generated by the generator coil. Of course, the dimensions and the position of the coils may be adapted to the particular dimensions of the rotor.

The magnetic flux, generated by the generator coil is distributed between the detection coils wherein the configuration of the detection coils allows the difference between the fields detected by the detection coils to be measured independently of any variations in the value of the field generated by the generator coil. This differential structure is preferably obtained by arranging the detection coils in a plane facing the generator coil. Of course, other configurations are contemplated to detect part of the flux of the magnetic field generated by the generator coil.

In operation, the primary or generator coil and the detection or secondary coils are coupled with a differential transformer and the presence of the rotor teeth changes the lines of the magnetic field generated by generator coil so that a difference appears between the fields picked up by the detection coils and the difference between the fields picked up by the detection coils allows the presence or passing of a metal tooth of the rotor to be detected.

In accordance with an exemplary embodiment, the generator coil is supplied with an alternating current, so that an alternating signal appears at the terminals of detection coils and the amplitude of the signal picked up by the detection coils is changed by the presence of a tooth wherein the amplitudes are a function of the spacing between a detection coil and a tooth of the rotor. In addition, the stop position of the rotor can be determined, by measuring the amplitude of the signal picked up by a one of the detection coils and comparing it to the amplitude of the signal picked up by the other one of the detection coils thus, the sensing device is able to distinguish between the presence and the absence of a rotor tooth.

The measurement of the rotational direction is based upon the fact that the detection coils are staggered with respect to the teeth of the rotor. Thus, the modulation of the signal at the terminals of detection coils is phase shifted. In addition, this phase shift corresponds to the spacing of the coils relative to the spacing of the teeth.

In addition, and in view of contemplated uses the sensor needs to meet automotive electrical specifications, which include but are not limited to the following requirements over voltage protection, reverse battery protection, reverse polarity protection and electromagnetic capabilities.

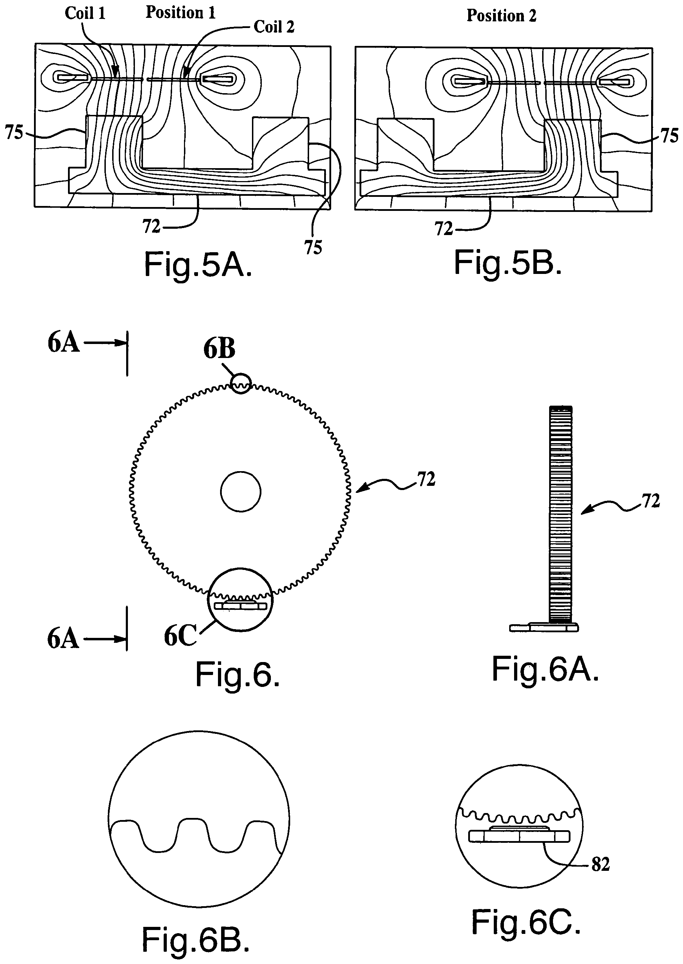

Figures 5A and 5B show magnetic fields generated as the teeth of an item such as rotor 72 pass by the coils of the inductance sensor assembly. Referring now to Figures 6-6C details of an exemplary rotor and teeth dimensions are illustrated. In accordance with an exemplary embodiment rotor 72 has 102 teeth mounted about a periphery having a diameter of approximately 70 millimeters, such a number of teeth will provide high resolution of the movement of the sliding door or the lift gate, which is not presently available with rotating magnet sensors presently used in other motor drive mechanisms. For example, magnet sensors are dependent upon the number of North and South poles that can be disposed in a magnet or in particular a ring magnet. Thus, resolution is dependent upon magnet size. In other words, the larger the magnet the more poles can be disposed on the same. Conversely, the smaller the magnet the smaller number of poles are provided and thus, such a magnet will not be able to provide as much resolution and the accuracy depends upon the number of poles.

In contrast, and in accordance with an exemplary embodiment, rotor 72 is much more accurate as each tooth provides much more accuracy in determining speed, direction and movement of the driven item (e.g., the vehicle door). For example, movement of two teeth past the sensor assembly will allow speed and direction of the door to be determined. In accordance with an exemplary embodiment, and as illustrated in Figure 6C each tooth has a pitch of approximately 2.16 millimeters. Of course, it is understood that rotors having dimensions greater or less than the aforementioned values as well as teeth numbers greater or less than the aforementioned values are considered to be within the scope of the present invention.

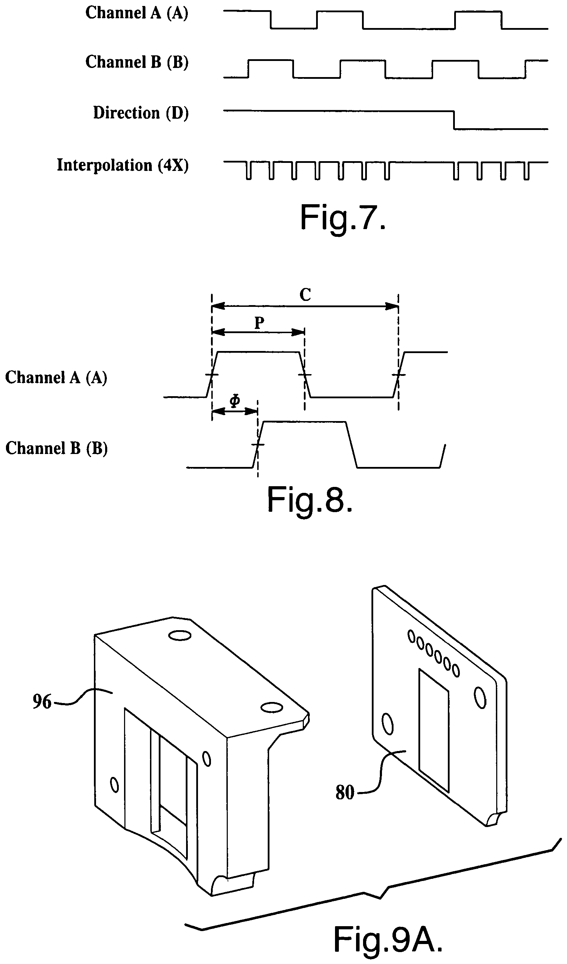

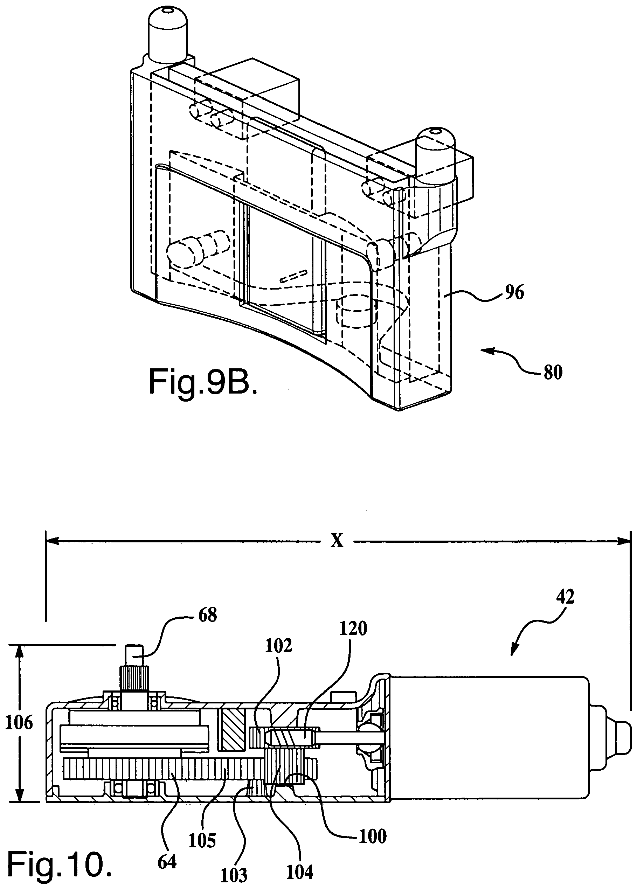

Figures 9A and 9B illustrates a housing 96 contemplated for housing the printed circuit board comprising the inductance sensor assembly 80. Housing 96 may be mounted to the motor drive unit by any suitable means including but not limited to heat staking, adhesives, riveting etc. and the sensor assembly is also mounted within housing 96 by any suitable means.

Figures 7 and 8 illustrate the output signals of the inductive sensor assembly. As shown in Figure 7 the ratio of the pulse-width (P) and the cycle width (C) will provide the duty cycle, wherein the phase difference is the difference between the two rising edges over the cycle-width.

In an alternative embodiment, sensor assembly 80 in Figure 3 is replaced with a Hall effect sensor assembly comprising an integrated circuit and magnet combination for digital sensing of the teeth 75 of the rotor 72 wherein a stationary magnet and a Hall effect IC has been configured to the magnetic circuit and signal processing occurs in response to magnetic signals created by the presence of the rotor teeth or lack thereof. An example of such a device is manufactured by Allegro Microsystems, Inc. under the product identification of ATS650LSH, ATS651LSH and equivalents thereof. Further information is found at the website for Allegro Microsystems, Inc., http://www.allegromicro.com. In this embodiment, the movement of the rotor teeth past the Hall effect sensor assembly will provide detectable changes in the magnetic field of the Hall effect device.

In order to operate the power sliding door of vehicle 10 it is contemplated that a sensing system will be installed in vehicle 10 such that signals received from an input device (e.g., switch or key fob) will cause motor drive unit 42 to open or close the door. The sensing system will provide the necessary signals to a control module or microprocessor having an algorithm for executing commands pursuant to signals received (e.g., Channels A and B) from the sensors including sensor assembly 80. An example of a sensor and controller arrangement can be found in U.S. Patents Nos. 5,263,762; 5,350,986; 5,396,158; 5,434,487; and 6,247,373. It is of course understood that the aforementioned U.S. patents merely provide examples of sensor and controller arrangements capable of being used with the present invention.

Figure 10 illustrates another alternative exemplary embodiment, here a second shaft 100 is rotatably received and provided in the housing and the worm gear 120 of the motor engages a first gear 102 mounted to shaft 100 and shaft 100 further comprises a second gear 104, which is configured and positioned to engage another gear 105 mounted on a shaft 103 wherein gear 105 is configured and positioned to engage gear 64. The configuration of gear 102 and gear 104 allows the torque of the motor to be stepped up or the speed of the motor to be stepped down, if necessary, for engagement and driving of the gear assembly. Furthermore, the use of shafts 100 and 103 allow for design flexibility (e.g., the diameters of the engaging gears may be varied as gear 105 acts as an idler gear).

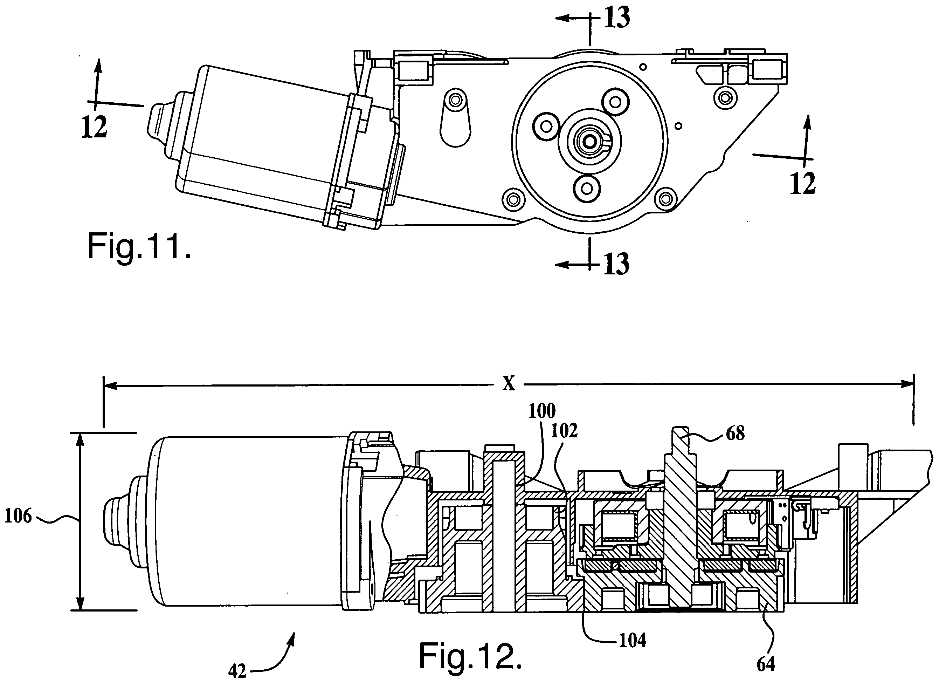

Alternatively and referring now to Figures 11-13, gear 104 is configured and positioned to directly engage gear 64 thereby negating the need for gear 105 and shaft 103 and gear 102 is directly driven by worm gear 120 of the motor (not shown in this Figure). This and the previous design allows the worm drive of the motor to be centrally located within a height profile 106 of motor drive unit 42 (e.g., a distance between the top of output member 40 including any covering and the opposite wall of the housing proximate to the opposite end of shaft 68, while still allowing the input force to be provided at an end or proximate to an end portion of shaft 68 without increasing the height profile of the motor drive unit. Thus, this design allows for use in smaller height profile areas while the length in the "x" direction can be lengthened. In particular, as becomes apparent from Figures 10 or 12, a height of the housing of the motor drive unit 42 is no greater than a corresponding dimension of a housing of the motor.

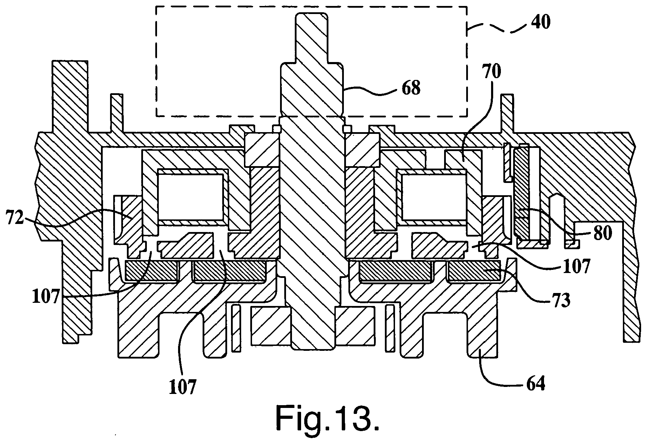

Also, first gear 102 and second gear 104 may be configured to provide a gear reduction ratio from worm gear 120 to gear 64. In an exemplary embodiment gears 102 and 104 are configured as a single member integrally molded about shaft 100 or alternatively, the gears are mounted onto a separate shaft 100. In accordance with an exemplary embodiment, gears 64, 102, 104 and 105 are each configured to have dimensions (e.g., diameter and number of teeth) to provide the desired transfer of torque or force to output member 40 from worm drive 120 of motor 60.
As illustrated in Figure 13, rotor 72 has apertures or openings 107, which are positioned to direct the flux path generated by the coil through the rotor in order to attract armature 73 to rotor 72. In accordance with an exemplary embodiment, the magnetic flux lines travel through a portion of the rotor and the armature but not through the plurality of teeth of the rotor. This provides for more accurate measurement of the teeth as they pass by the sensor assembly (hall effect or inductance sensor assembly) as the flux path will not interfere with the sensor assembly.

## Claims

1. A motor drive unit (42) for a vehicle door (14), the motor drive unit (42) comprising:
a motor (60) having a driving member comprising a worm gear (120);
a motor drive unit housing having a first shaft (68) rotatably received therein;
an input gear (64) being rotatably received upon the first shaft (68), the input gear (64) being operatively associated with the driving member such that rotation of the driving member causes rotation of the input gear (64);
a second shaft (100) comprising a first gear (102) and a second gear (104), the second gear (104) directly engages the input gear (64) and the first gear (102) is directly driven by the worm gear (120) of the motor (60);
an output member (40) fixedly secured to the first shaft (68);
an electromagnetic clutch, comprising:
i) an armature (73) mounted on the input member (64);
ii) a rotor (72) fixedly secured to the first shaft (68), the rotor (72) being cylindrical in shape and has a plurality of teeth (75) positioned along the periphery of the rotor (72), the teeth (75) being positioned in an equidistant manner;
iii) a coil (70) mounted to the motor drive unit housing, the coil (70) providing magnetic flux lines through the rotor (72) to attract the armature (73) when the coil (70) is energized thereby coupling the input member (64) to the rotor (72), wherein the magnetic flux lines travel through a portion of the rotor (72) and the armature (73) but not through the plurality of teeth (75) of the rotor (72),
wherein rotation of the output member (40) by a force other than the motor (60) will cause rotation of the first shaft (68) and the rotor (72) when the coil (70) is not energized;
the motor drive unit (42) further comprising:
an inductance sensor assembly (80) mounted to the motor drive unit housing in a facing spaced relationship with respect to the plurality of teeth (75) of the rotor (72), wherein rotational speed and direction of the rotor (72) is detected by the inductance sensor assembly (80) as the plurality of teeth (75) of the rotor (72) pass by the inductance sensor assembly (80); and
wherein the worm gear (120) of the motor (60) is centrally located within a height profile (106) of the motor drive unit (42), the height profile (106) being a distance between the top of the output member (40) including any covering and an opposite wall of the motor drive unit housing proximate to an opposite end of the first shaft (68).

2. The motor drive unit (42) as in claim 1, wherein the vehicle door (14) is a lift gate (15) or a sliding door (14).

3. The motor drive unit (42) as in any of the preceding claims, wherein the inductance sensor assembly (80) comprises a sensor chip (82) with interfacing electronics, wherein the interfacing electronic provides an excitation to a generating micro-coil (84) of the sensor chip (82) for generating a magnetic field, which is varied by the plurality of teeth (75) of the rotor (72) as the rotor (72) is rotated and wherein the sensor chip (82) further comprises two pairs of detection coils (86, 88) arranged to eliminate common mode disturbances.

4. The motor drive unit (42) as in claim 3, wherein the interfacing electronics is configured to provide two output channels each providing a signal indicative of variations in a magnetic field induced by the generating micro-coil (84) and sensed by the two pairs of detection coils (86, 88), wherein the signals of the two output channels is provided in either a digital or analog format and the signals of the two output channels are provided to a microprocessor configured to control the motor drive unit (42).

5. The motor drive unit (42) as in claim 4, wherein the interfacing electronics is configured to provide an output indicative of a direction and a speed the rotor (72) is rotating after two of the plurality of teeth (75) pass by the inductance sensor assembly (80).

6. The motor drive unit (42) as in claim 5, wherein the rotor (72) has 102 teeth (75) mounted about a periphery having a diameter of approximately 70 millimeters and each tooth has a pitch of approximately 2.16 millimeters.

7. The motor drive unit (42) as in claim 5, wherein the plurality of output signals have a periodicity identical to the plurality of teeth (75) of the rotor (72).

8. The motor drive unit (42) as in any of the preceding claims, wherein the second shaft (100) is rotatably received in the motor drive unit housing, the second shaft (100) having a gear assembly comprising the first gear (102) and the second gear (104), wherein the first gear (102) has a diameter smaller than the second gear (104) and the first gear (102) is configured to engage the driving member (62) of the motor (60) and the second gear (104) is configured to engage the input member (64), wherein a height of the motor drive unit housing of the motor drive unit (42) is no greater than a corresponding dimension of a housing of the motor (60).

9. A modular drive assembly (24) for a sliding door (14), comprising:
a motor drive unit (42) as in any of the preceding claims;
a guide track (26) having a hinge assembly (28) slidably received therein;
a pair of pulleys (48, 50) disposed on either end of said guide track (26), said pair of pulleys (48, 50) being disposed adjacent to a path of travel of said hinge assembly (28) within said guide track (26), said path of travel being defined by a closed door limit and an open door limit; and
a pair of cables (38) each having an end that is secured to said hinge assembly (28) and the other end is secured to the output member (40) being a cable drum (40) of the motor drive unit (42) mounted to said guide track (26), said motor drive unit (42) being configured to rotate said cable drum (40), wherein said cable drum (40) is also capable of freely rotating within said motor drive unit (42) when said motor drive unit (42) is not rotating said cable drum (40), wherein rotation of said cable drum (40) causes said hinge assembly (28) to move in said guide track (26) as one of said cables (38) wraps onto said cable drum (40) while the other one of said cables (38) wraps off of said cable drum (40), wherein said hinge assembly (28) passes a portion of one of said pair of pulleys (48, 50) when said hinge assembly (28) is at said closed door limit and said hinge assembly (28) passes a portion of the other one of said pair of pulleys (48, 50) when said hinge assembly (28) is at said open door limit, wherein
the motor (60) being mounted to the motor drive unit housing; and
the cable drum (40) is fixedly secured to the first shaft (68), wherein rotation of the cable drum (40) by a force other than the motor (60) will cause rotation of the rotor (72) when the coil (70) is not energized and rotational speed and direction of the rotor (72) is detected by the inductance sensor assembly (80) as the plurality of teeth (75) of the rotor (72) pass by the inductance sensor assembly (80).

10. The modular drive assembly (24) as in claim 9, wherein said modular drive assembly (24) is secured to a vehicle (10) as a single unit and the guide track (26) is a lower guide track and said modular drive assembly (24) provides an opening and a closing force to the sliding door (14) and said curved portion corresponding to a portion of a periphery of a door opening in a vehicle (10).

11. The modular drive assembly (24) as in claim 9, wherein said guide track (26) is configured to provide a lower track of the sliding door (14) and wherein the height of said motor drive unit (42) is no greater than the height of said guide track (26).

12. The modular drive assembly (24) as in claim 9, wherein said guide track (26) defines a channel on one side and said motor drive unit (42) is mounted to an opposite side of the guide track (26) and the height of said motor drive unit (42) is no greater than the height of said guide track (26).

13. The modular drive assembly (24) as in claim 9, wherein said hinge assembly (28) comprises a roller portion slidably received within a channel of said guide track (26) and a mounting portion pivotally mounted to said roller portion, said mounting portion adapted to be secured to the sliding door (14).

14. The modular drive assembly (24) as in claim 9, wherein a first conduit (44) is disposed between a motor drive unit housing of said motor drive unit (42) and a housing (52) of one of said pair of pulleys (48) and a second conduit (46) is disposed between said motor drive unit housing of said motor drive unit (42) and a housing (54) of the other one of said pair of pulleys (50).

15. The modular drive assembly (24) as in claim 14, wherein a tensioner is disposed between said hinge assembly (28) and said end of each of said cables (38), said tensioner allows an operative length of said cables (38) to change as said hinge assembly (28) travels within said path of travel.

16. The modular drive assembly (24) as in claim 9, wherein the second shaft (100) is rotatably received in the motor drive unit housing of the motor drive unit (42), wherein the first gear (102) has a diameter smaller than the second gear (104) and the first gear (102) is configured to engage the driving member (62) of the motor (60) and the second gear (104) is configured to engage the input member (64), wherein a height of the second shaft (100) is no greater than a corresponding dimension of a housing of the motor (60).

17. The modular drive assembly (24) as in any of the preceding claims 9 to 16, wherein the inductance sensor assembly (80) comprises a sensor chip (82) with interfacing electronics, wherein the interfacing electronic provides an excitation to a generating micro-coil (84) of the sensor chip (82) for generating a magnetic field, which is varied by the plurality of teeth (75) of the rotor (72) as the rotor (72) is rotated and wherein the sensor chip (82) further comprises two pairs of detection coils (86, 88) arranged to eliminate common mode disturbances.

18. The modular drive assembly (24) as in claim 17, wherein the interfacing electronics is configured to provide two output channels each providing a signal indicative of variations in a magnetic field induced by the generating micro-coil (84) and sensed by the two pairs of detection coils (86, 88), wherein the signals of the two output channels is provided in either a digital or analog format and the signals of the two output channels are provided to a microprocessor configured to control the motor drive unit (42).

19. The modular drive assembly (24) as in claim 18, wherein the interfacing electronics is configured to provide an output indicative of a direction and a speed the rotor (72) is rotating after two of the plurality of teeth (75) pass by the inductance sensor assembly (80).

20. The modular drive assembly (24) as in claim 19, wherein the rotor (72) has 102 teeth (75) mounted about a periphery having a diameter of approximately 70 millimeters and each tooth has a pitch of approximately 2.16 millimeters.

21. The modular drive assembly (24) as in claim 19, wherein the plurality of output signals have a periodicity identical to the plurality of teeth (75) of the rotor (72).

22. The modular drive assembly (24) as in claim 19, wherein a height of the motor drive unit housing of the motor drive unit (42), containing the first shaft (68) and the second shaft (100) is no greater than a corresponding dimension of a housing of the motor (60).

## Patentansprüche

1. Motorantriebseinheit (42) für eine Fahrzeugtür (14), wobei die Motorantriebseinheit (42) Folgendes umfasst:
einen Motor (60) mit einem Antriebselement, das ein Schneckengetriebe (120) umfasst;
ein Motorantriebseinheit-Gehäuse mit einer darin drehbar aufgenommenen ersten Welle (68);
ein Antriebszahnrad (64), das drehbar auf der ersten Welle (68) aufgenommen ist, wobei das Antriebszahnrad (64) betriebsmäßig mit dem Antriebselement verbunden ist, so dass eine Drehung des Antriebselements eine Drehung des Antriebszahnrads (64) bewirkt;
eine zweite Welle (100), umfassend ein erstes Zahnrad (102) und ein zweites Zahnrad (104), wobei das zweite Zahnrad (104) direkt in das Antriebszahnrad (64) eingreift und wobei das erste Zahnrad (102) direkt durch das Schneckengetriebe (120) des Motors (60) angetrieben wird;
ein Abtriebselement (40), das fest mit der ersten Welle (68) verbunden ist;
eine elektromagnetische Kupplung, umfassend:
i) einen Anker (73), der an dem Antriebselement (64) montiert ist;
ii) einen Rotor (72), der fest an der ersten Welle (68) befestigt ist, wobei der Rotor (72) eine zylindrische Form hat und mehrere Zähne (75) aufweist, die entlang des Umfangs des Rotors (72) angeordnet sind, wobei die Zähne (75) in gleichem Abstand voneinander angeordnet sind;
iii) eine Spule (70), die am Motorantriebseinheit-Gehäuse angebracht ist, wobei die Spule (70) Magnetflusslinien durch den Rotor (72) liefert, um den Anker (73) anzuziehen, wenn die Spule (70) erregt wird, wodurch das Antriebselement (64) mit dem Rotor (72) gekoppelt wird, wobei die magnetischen Flusslinien durch einen Teil des Rotors (72) und den Anker (73), aber nicht durch die mehreren Zähne (75) des Rotors (72) verlaufen,
wobei eine Drehung des Abtriebselements (40) durch eine andere Kraft als der Motor (60) eine Drehung der ersten Welle (68) und des Rotors (72) bewirkt, wenn die Spule (70) nicht erregt ist;
wobei die Motorantriebseinheit (42) ferner Folgendes umfasst:
eine Induktivitätssensor-Baugruppe (80), die am Motorantriebseinheit-Gehäuse in einer einander zugewandten, beabstandeten Beziehung in Bezug auf die mehreren Zähne (75) des Rotors (72) angebracht ist, wobei die Drehgeschwindigkeit und -richtung des Rotors (72) durch die Induktivitätssensor-Baugruppe (80) erfasst wird, wenn die mehreren Zähne (75) des Rotors (72) an der Induktivitätssensor-Baugruppe (80) vorbeiziehen; und
wobei das Schneckengetriebe (120) des Motors (60) zentral innerhalb eines Höhenprofils (106) der Motorantriebseinheit (42) angeordnet ist, wobei das Höhenprofil (106) ein Abstand zwischen der Oberseite des Abtriebselements (40) einschließlich einer Abdeckung und einer gegenüberliegenden Wand des Motorantriebseinheit-Gehäuses in der Nähe eines gegenüberliegenden Endes der ersten Welle (68) ist.

2. Motorantriebseinheit (42) nach Anspruch 1, wobei die Fahrzeugtür (14) eine Hubtür (15) oder eine Schiebetür (14) ist.

3. Motorantriebseinheit (42) nach einem der vorhergehenden Ansprüche, wobei die Induktivitätssensor-Baugruppe (80) einen Sensorchip (82) mit einer Schnittstellen-Elektronik umfasst, wobei die Schnittstellen-Elektronik eine Erregung für eine erzeugende Mikrospule (84) des Sensorchips (82) bereitstellt, um ein Magnetfeld zu erzeugen, das beim Drehen des Rotors (72) durch die mehreren Zähne (75) des Rotors (72) variiert wird, und wobei der Sensorchip (82) ferner zwei Paare von Detektorspulen (86, 88) umfasst, die so angeordnet sind, dass sie Gleichtaktstörungen eliminieren.

4. Motorantriebseinheit (42) nach Anspruch 3, wobei die Schnittstellen-Elektronik so konfiguriert ist, dass sie zwei Ausgangskanäle bereitstellt, von denen jeder ein Signal bereitstellt, das Schwankungen in einem Magnetfeld anzeigt, das von der erzeugenden Mikrospule (84) induziert und von den beiden Paaren von Detektorspulen (86, 88) erfasst wird, wobei die Signale der beiden Ausgangskanäle entweder in einem digitalen oder analogen Format bereitgestellt werden und wobei die Signale der beiden Ausgangskanäle einem Mikroprozessor zugeführt werden, der so konfiguriert ist, dass er die Motorantriebseinheit (42) steuert.

5. Motorantriebseinheit (42) nach Anspruch 4, wobei die Schnittstellen-Elektronik so konfiguriert ist, dass sie ein Ausgangssignal liefert, das eine Richtung und eine Geschwindigkeit angibt, mit der sich der Rotor (72) dreht, nachdem zwei der mehreren Zähne (75) an der Induktivitätssensoranordnung (80) vorbeigezogen sind.

6. Motorantriebseinheit (42) nach Anspruch 5, wobei der Rotor (72) 102 Zähne (75) aufweist, die um einen Umfang mit einem Durchmesser von etwa 70 Millimetern montiert sind, und jeder Zahn eine Teilung von etwa 2,16 Millimetern hat.

7. Motorantriebseinheit (42) nach Anspruch 5, wobei die mehreren Ausgangssignale eine Periodizität aufweisen, die mit der Anzahl der Zähne (75) des Rotors (72) identisch ist.

8. Motorantriebseinheit (42) nach einem der vorhergehenden Ansprüche, wobei die zweite Welle (100) drehbar in dem Motorantriebseinheit-Gehäuse aufgenommen ist, wobei die zweite Welle (100) eine Zahnradanordnung aufweist, die das erste Zahnrad (102) und das zweite Zahnrad (104) umfasst, wobei das erste Zahnrad (102) einen Durchmesser hat, der kleiner als der des zweiten Zahnrads (104) ist, und wobei das erste Zahnrad (102) so konfiguriert ist, dass es in das Antriebselement (62) des Motors (60) eingreift, und wobei das zweite Zahnrad (104) so konfiguriert ist, dass es in das Antriebselement (64) eingreift, wobei eine Höhe des Motorantriebseinheit-Gehäuses der Motorantriebseinheit (42) nicht größer als eine entsprechende Abmessung eines Gehäuses des Motors (60) ist.

9. Modulare Antriebsbaugruppe (24) für eine Schiebetür (14), umfassend:
eine Motorantriebseinheit (42) wie in einem der vorhergehenden Ansprüche;
eine Führungsschiene (26) mit einer darin verschiebbar aufgenommenen Scharnieranordnung (28);
ein Paar von Laufrollen (48, 50), die an beiden Enden der Führungsschiene (26) angeordnet sind, wobei das Paar von Laufrollen (48, 50) angrenzend an eine Laufbahn der Scharnieranordnung (28) innerhalb der Führungsschiene (26) angeordnet ist, wobei die Laufbahn durch eine Tür-Schließbegrenzung und eine Tür-Öffnungsbegrenzungdefiniert ist; und
ein Paar von Kabeln (38), von denen jedes ein Ende aufweist, das an der Scharnieranordnung (28) befestigt ist, und das andere Ende an dem Ausgangselement (40) befestigt ist, das eine Kabeltrommel (40) der Motorantriebseinheit (42) ist, die an der Führungsschiene (26) montiert ist, wobei die Motorantriebseinheit (42) konfiguriert ist, um die Kabeltrommel (40) zu drehen, wobei die Kabeltrommel (40) auch in der Lage ist, sich innerhalb der Motorantriebseinheit (42) frei zu drehen, wenn die Motorantriebseinheit (42) die Kabeltrommel (40) nicht dreht, wobei eine Drehung der Kabeltrommel (40) bewirkt, dass sich die Scharnieranordnung (28) in der Führungsschiene (26) bewegt, wenn sich eines der Kabel (38) auf die Kabeltrommel (40) aufwickelt, während sich das andere der Kabel (38) von der Kabeltrommel (40) abwickelt, wobei die Scharnieranordnung (28) an einem Abschnitt einer der beiden Laufrollen (48, 50) vorbeizieht, wenn sich die Scharnieranordnung (28) an der Tür-Schließbegrenzung befindet, und wobei die Scharnieranordnung (28) an einem Abschnitt der anderen des Paares von Laufrollen (48, 50) vorbeizieht, wenn sich die Scharnieranordnung (28) an der Tür-Öffnungsbegrenzung befindet,
wobei der Motor (60) am Motorantriebseinheit-Gehäuse montiert ist; und
wobei die Kabeltrommel (40) fest an der ersten Welle (68) befestigt ist, wobei eine Drehung der Kabeltrommel (40) durch eine andere Kraft als der Motor (60) eine Drehung des Rotors (72) bewirkt, wenn die Spule (70) nicht erregt ist, und wobei die Drehgeschwindigkeit und -richtung des Rotors (72) durch die Induktivitätssensor-Baugruppe (80) erfasst wird, wenn die mehreren Zähne (75) des Rotors (72) an der Induktivitätssensor-Baugruppe (80) vorbeiziehen.

10. Modulare Antriebsbaugruppe (24) nach Anspruch 9, wobei die modulare Antriebsbaugruppe (24) als eine einzelne Einheit an einem Fahrzeug (10) befestigt ist und wobei die Führungsschiene (26) eine untere Führungsschiene ist und wobei die modulare Antriebsbaugruppe (24) eine Öffnungs- und Schließkraft auf die Schiebetür (14) ausübt und wobei der kurvenförmige Abschnitt einem Abschnitt eines Umfangs einer Türöffnung in einem Fahrzeug (10) entspricht.

11. Modulare Antriebsbaugruppe (24) nach Anspruch 9, wobei die Führungsschiene (26) so konfiguriert ist, dass sie eine untere Schiene der Schiebetür (14) bildet, und wobei die Höhe der Motorantriebseinheit (42) nicht größer als die Höhe der Führungsschiene (26) ist.

12. Modulare Antriebsanordnung (24) nach Anspruch 9, wobei die Führungsschiene (26) auf einer Seite einen Kanal definiert und wobei die Motorantriebseinheit (42) auf einer gegenüberliegenden Seite der Führungsschiene (26) montiert ist und wobei die Höhe der Motorantriebseinheit (42) nicht größer als die Höhe der Führungsschiene (26) ist.

13. Modulare Antriebsbaugruppe (24) nach Anspruch 9, wobei die Scharnieranordnung (28) einen Rollenabschnitt, der gleitend in einem Kanal der Führungsschiene (26) aufgenommen ist, und einen schwenkbar an dem Rollenabschnitt angebrachten Befestigungsabschnitt aufweist, wobei der Befestigungsabschnitt an der Schiebetür (14) befestigt werden kann.

14. Modulare Antriebsanordnung (24) nach Anspruch 9, wobei ein erster Kanal (44) zwischen einem Motorantriebseinheit-Gehäuse der Motorantriebseinheit (42) und einem Gehäuse (52) von einer des Paares von Laufrollen (48) angeordnet ist und wobei ein zweiter Kanal (46) zwischen dem Motorantriebseinheit-Gehäuse der Motorantriebseinheit (42) und einem Gehäuse (54) der anderen des Paares von Laufrollen (50) angeordnet ist.

15. Modulare Antriebsbaugruppe (24) nach Anspruch 14, wobei eine Spannvorrichtung zwischen der Scharnieranordnung (28) und dem Ende jedes Kabels (38) angeordnet ist, wobei die Spannvorrichtung eine Änderung der wirksamen Länge der Kabel (38) ermöglicht, wenn sich die Scharnieranordnung (28) innerhalb der Laufbahn bewegt.

16. Modulare Antriebsbaugruppe (24) nach Anspruch 9, wobei die zweite Welle (100) drehbar in dem Motorantriebseinheit-Gehäuse der Motorantriebseinheit (42) aufgenommen ist, wobei das erste Zahnrad (102) einen kleineren Durchmesser als das zweite Zahnrad (104) aufweist und wobei das erste Zahnrad (102) so konfiguriert ist, dass es in das Antriebselement (62) des Motors (60) eingreift, und wobei das zweite Zahnrad (104) so konfiguriert ist, dass es in das Antriebselement (64) eingreift, wobei eine Höhe der zweiten Welle (100) nicht größer als eine entsprechende Abmessung eines Gehäuses des Motors (60) ist.

17. Modulare Antriebsbaugruppe (24) nach einem der vorhergehenden Ansprüche 9 bis 16, wobei die Induktivitätssensor-Baugruppe (80) einen Sensorchip (82) mit einer Schnittstellen-Elektronik umfasst, wobei die Schnittstellen-Elektronik eine Erregung für eine erzeugende Mikrospule (84) des Sensorchips (82) bereitstellt, um ein Magnetfeld zu erzeugen, das beim Drehen des Rotors (72) durch die mehreren Zähne (75) des Rotors (72) variiert wird, und wobei der Sensorchip (82) ferner zwei Paare von Detektorspulen (86, 88) umfasst, die so angeordnet sind, dass sie Gleichtaktstörungen eliminieren.

18. Modulare Antriebsbaugruppe (24) nach Anspruch 17, wobei die Schnittstellen-Elektronik so konfiguriert ist, dass sie zwei Ausgangskanäle bereitstellt, von denen jeder ein Signal bereitstellt, das Schwankungen in einem Magnetfeld anzeigt, das von der erzeugenden Mikrospule (84) induziert wird und von den beiden Paaren von Detektorspulen (86, 88) erfasst wird, wobei die Signale der beiden Ausgangskanäle entweder in einem digitalen oder analogen Format bereitgestellt werden und wobei die Signale der beiden Ausgangskanäle einem Mikroprozessor zugeführt werden, der so konfiguriert ist, dass er die Motorantriebseinheit (42) steuert.

19. Modulare Antriebsbaugruppe (24) nach Anspruch 18, wobei die Schnittstellen-Elektronik so konfiguriert ist, dass sie ein Ausgangssignal liefert, das eine Richtung und eine Geschwindigkeit angibt, mit der sich der Rotor (72) dreht, nachdem zwei der mehreren Zähne (75) an der Induktivitätssensor-Baugruppe (80) vorbeigezogen sind.

20. Modulare Antriebsbaugruppe (24) nach Anspruch 19, wobei der Rotor (72) 102 Zähne (75) aufweist, die um einen Umfang mit einem Durchmesser von etwa 70 Millimetern montiert sind, und jeder Zahn eine Teilung von etwa 2,16 Millimetern hat.

21. Modulare Antriebsbaugruppe (24) nach Anspruch 19, wobei die mehreren Ausgangssignale eine Periodizität aufweisen, die mit der Anzahl der Zähne (75) des Rotors (72) identisch ist.

22. Modulare Antriebsbaugruppe (24) nach Anspruch 19, wobei eine Höhe des Motorantriebseinheit-Gehäuses der Motorantriebseinheit (42), die die erste Welle (68) und die zweite Welle (100) enthält, nicht größer ist als eine entsprechende Abmessung eines Gehäuses des Motors (60).

## Revendications

1. Unité d'entraînement de moteur (42) pour une porte de véhicule (14), l'unité d'entraînement de moteur (42) comprenant :
un moteur (60) comportant un élément d'entraînement comprenant un engrenage à vis sans fin (120) ;
un boîtier d'unité d'entraînement de moteur comportant un premier arbre (68) reçu en rotation à l'intérieur de celui-ci ;
un engrenage d'entrée (64) étant reçu en rotation sur le premier arbre (68), l'engrenage d'entrée (64) étant associé de manière fonctionnelle à l'élément d'entraînement de telle sorte que la rotation de l'élément d'entraînement amène la rotation de l'engrenage d'entrée (64) ;
un second arbre (100) comprenant un premier engrenage (102) et un second engrenage (104), le second engrenage (104) vient en prise directement avec l'engrenage d'entrée (64) et le premier engrenage (102) est directement entraîné par l'engrenage à vis sans fin (120) du moteur (60) ;
un élément de sortie (40) fixé solidement au premier arbre (68) ;
un embrayage électromagnétique, comprenant :
i) une armature (73) montée sur l'élément d'entrée (64) ;
ii) un rotor (72) fixé solidement au premier arbre (68), le rotor (72) étant de forme cylindrique et ayant une pluralité de dents (75) positionnées le long de la périphérie du rotor (72), les dents (75) étant positionnées de façon équidistante ;
iii) une bobine (70) montée sur le boîtier d'unité d'entraînement de moteur, la bobine (70) fournissant des lignes de flux magnétique à travers le rotor (72) pour attirer l'armature (73) lorsque la bobine (70) est excitée, couplant ainsi l'élément d'entrée (64) au rotor (72), dans laquelle les lignes de flux magnétique traversent une partie du rotor (72) et l'armature (73) mais pas la pluralité de dents (75) du rotor (72), dans laquelle la rotation de l'élément de sortie (40) par une force autre que le moteur (60) amènera la rotation du premier arbre (68) et du rotor (72) lorsque la bobine (70) n'est pas alimentée ;
l'unité d'entraînement de moteur (42) comprenant en outre :
un ensemble capteur d'inductance (80) monté sur le boîtier d'unité d'entraînement de moteur dans une relation espacée en face-à-face par rapport à la pluralité de dents (75) du rotor (72), dans laquelle une vitesse et une direction de rotation du rotor (72) sont détectées par le second ensemble capteur d'inductance (80) lorsque la pluralité de dents (75) du rotor (72) passent par l'ensemble capteur d'inductance (80) ; et
dans lequel l'engrenage à vis sans fin (120) du moteur (60) se trouve au centre dans un profil de hauteur (106) de l'unité d'entraînement de moteur (42), le profil de hauteur (106) étant une distance entre le haut de l'élément de sortie (40) comprenant tout recouvrement et une paroi opposée du boîtier d'unité d'entraînement de moteur à proximité d'une extrémité opposée du premier arbre (68).

2. Unité d'entraînement de moteur (42) selon la revendication 1, dans laquelle la porte de véhicule (14) est un hayon (15) ou une porte coulissante (14).

3. Unité d'entraînement de moteur (42) selon l'une quelconque des revendications précédentes, dans laquelle l'ensemble de détection d'inductance (80) comprend une puce de capteur (82) avec une électronique d'interfaçage, dans laquelle l'électronique d'interfaçage fournit une alimentation à une micro-bobine génératrice (84) de la puce de capteur (82) pour générer un champ magnétique, qui varie en fonction de la pluralité de dents (75) du rotor (72) lorsque le rotor (72) est mis en rotation et dans laquelle la puce de capteur (82) comprend en outre deux paires de bobines de détection (86, 88) disposées pour éliminer des perturbations de mode commun.

4. Unité d'entraînement de moteur (42) selon la revendication 3, dans laquelle l'électronique d'interfaçage est configurée pour fournir deux canaux de sortie fournissant chacun un signal indiquant des variations dans un champ magnétique induit par la micro-bobine génératrice (84) et détecté par les deux paires de bobines de détection (86, 88), dans laquelle les signaux des deux canaux de sortie sont fournis dans un format numérique ou analogique et les signaux des deux canaux de sortie sont fournis à un microprocesseur configuré pour commander l'unité d'entraînement de moteur (42).

5. Unité d'entraînement de moteur (42) selon la revendication 4, dans laquelle l'électronique d'interfaçage est configurée pour fournir une sortie indiquant une direction et une vitesse de rotation du rotor (72) après passage de deux de la pluralité de dents (75) par l'ensemble capteur d'inductance (80).

6. Unité d'entraînement de moteur (42) selon la revendication 5, dans laquelle le rotor (72) a 102 dents (75) montées autour d'une périphérie ayant un diamètre d'environ 70 millimètres et chaque dent a un pas d'environ 2,16 millimètres.

7. Unité d'entraînement de moteur (42) selon la revendication 5, dans laquelle la pluralité de signaux de sortie ont une périodicité identique à la pluralité de dents (75) du rotor (72).

8. Unité d'entraînement de moteur (42) selon l'une quelconque des revendications précédentes, dans laquelle le second arbre (100) est reçu en rotation dans le boîtier d'unité d'entraînement de moteur, le second arbre (100) ayant un ensemble d'engrenages comprenant le premier engrenage (102) et le second engrenage (104), dans laquelle le premier engrenage (102) a un diamètre inférieur à celui du second engrenage (104) et le premier engrenage (102) est configuré pour venir en prise avec l'élément d'entraînement (62) du moteur (60) et le second engrenage (104) est configuré pour venir en prise avec l'élément d'entrée (64), dans laquelle la hauteur du boîtier d'unité d'entraînement de moteur (42) n'est pas supérieure à une dimension correspondante d'un boîtier du moteur (60).

9. Ensemble d'entraînement modulaire (24) pour une porte coulissante (14), comprenant :
une unité d'entraînement de moteur (42) selon l'une quelconque des revendications précédentes ;
un chemin de guidage (26) ayant un ensemble charnière (28) reçu de façon coulissante à l'intérieur de celui-ci ;
une paire de poulies (48, 50) disposées à chaque extrémité dudit chemin de guidage (26), ladite paire de poulies (48, 50) étant disposée adjacente à un chemin de déplacement dudit ensemble charnière (28) à l'intérieur dudit chemin de guidage (26), ledit chemin de déplacement étant défini par une limite de porte fermée et une limite de porte ouverte ; et
une paire de câbles (38) ayant chacun une extrémité qui est fixée audit ensemble charnière (28) et l'autre extrémité est fixée à l'élément de sortie (40) qui est un touret de câble (40) de l'unité d'entraînement de moteur (42) montée sur ledit chemin de guidage (26), ladite unité d'entraînement de moteur (42) étant configurée pour faire tourner ledit touret de câble (40), dans lequel ledit touret de câble (40) est également capable de tourner librement dans ladite unité d'entraînement de moteur (42) lorsque ladite unité d'entraînement de moteur (42) ne fait pas tourner ledit touret de câble (40), dans lequel la rotation dudit touret de câble (40) amène ledit ensemble charnière (28) à se déplacer dans ledit chemin de guidage (26) lorsque l'un desdits câbles (38) s'enroule sur ledit touret de câble (40) tandis que l'autre desdits câbles (38) s'enroule sur ledit touret de câble (40), dans lequel ledit ensemble charnière (28) passe une partie de l'une desdites paires de poulies (48, 50) lorsque ledit ensemble charnière (28) est à ladite limite de porte fermée et ledit ensemble charnière (28) passe une partie de l'autre poulie de ladite paire de poulies (48, 50) lorsque ledit ensemble charnière (28) est à ladite limite de porte ouverte, dans lequel le moteur (60) est monté sur le boîtier d'unité d'entraînement de moteur ; et
le touret de câble (40) est fixé de manière fixe au premier arbre (68), dans lequel la rotation du touret de câble (40) par une force autre que le moteur (60) amènera la rotation du rotor (72) lorsque la bobine (70) n'est pas excitée et la vitesse de rotation et la direction du rotor (72) sont détectées par l'ensemble capteur d'inductance (80) lorsque la pluralité de dents (75) du rotor (72) passent par l'ensemble capteur inductance (80).

10. Ensemble d'entraînement modulaire (24) selon la revendication 9, dans lequel ledit ensemble d'entraînement modulaire (24) est fixé à un véhicule (10) comme une seule unité et le chemin de guidage (26) est un chemin de guidage inférieur et ledit ensemble d'entraînement modulaire (24) fournit une force d'ouverture et de fermeture à la porte coulissante (14) et ladite partie incurvée correspond à une partie d'une périphérie d'une ouverture de porte dans un véhicule (10).

11. Ensemble d'entraînement modulaire (24) selon la revendication 9, dans lequel ledit chemin de guidage (26) est conçu pour fournir un chemin inférieur de la porte coulissante (14) et dans lequel la hauteur de ladite unité d'entraînement de moteur (42) n'est pas supérieure à la hauteur dudit chemin de guidage (26).

12. Ensemble d'entraînement modulaire (24) selon la revendication 9, dans lequel ledit chemin de guidage (26) définit un canal sur un côté et ladite unité d'entraînement de moteur (42) est montée sur un côté opposé du chemin de guidage (26) et la hauteur de ladite unité d'entraînement de moteur (42) n'est pas supérieure à la hauteur dudit chemin de guidage (26).

13. Ensemble d'entraînement modulaire (24) selon la revendication 9, dans lequel ledit ensemble charnière (28) comprend une partie de rouleau reçue de façon coulissante à l'intérieur d'un canal dudit chemin de guidage (26) et une partie de montage montée de façon pivotante sur ladite partie de rouleau, ladite partie de montage étant adaptée pour être fixée à la porte coulissante (14).

14. Ensemble d'entraînement modulaire (24) selon la revendication 9, dans lequel un premier conduit (44) est disposé entre un boîtier d'unité d'entraînement de moteur de ladite unité d'entraînement de moteur (42) et un boîtier (52) d'une poulie de ladite paire de poulies (48) et un second conduit (46) sont disposés entre ledit boîtier d'unité d'entraînement de moteur de ladite unité d'entraînement de moteur (42) et un boîtier (54) de l'autre poulie de ladite paire de poulies (50).

15. Ensemble d'entraînement modulaire (24) selon la revendication 14, dans lequel un tendeur est disposé entre ledit ensemble charnière (28) et ladite extrémité de chacun desdits câbles (38), ledit tendeur permettant à une longueur opérationnelle desdits câbles (38) de changer lorsque ledit ensemble charnière (28) se déplace dans ledit chemin de déplacement.

16. Ensemble d'entraînement modulaire (24) selon la revendication 9, dans lequel le second arbre (100) est reçu en rotation dans le boîtier d'unité d'entraînement de moteur de l'unité d'entraînement de moteur (42), dans lequel le premier engrenage (102) a un diamètre inférieur à celui du second engrenage (104) et le premier engrenage (102) est configuré pour venir en prise avec l'élément d'entraînement (62) du moteur (60) et le second engrenage (104) est configuré pour venir en prise avec l'élément d'entrée (64), dans lequel une hauteur du second arbre (100) n'est pas supérieure à une dimension correspondante d'un boîtier du moteur (60).

17. Ensemble d'entraînement modulaire (24) selon l'une quelconque des revendications précédentes 9 à 16, dans lequel l'ensemble de détection d'inductance (80) comprend une puce de capteur (82) avec une électronique d'interfaçage, dans lequel l'électronique d'interfaçage fournit une alimentation à une micro-bobine génératrice (84) de la puce de capteur (82) pour générer un champ magnétique, qui varie en fonction de la pluralité de dents (75) du rotor (72) lorsque le rotor (72) est mis en rotation et dans lequel la puce de capteur (82) comprend en outre deux paires de bobines de détection (86, 88) disposées pour éliminer des perturbations de mode commun.

18. Ensemble d'entraînement modulaire (24) selon la revendication 17, dans lequel l'électronique d'interfaçage est configurée pour fournir deux canaux de sortie fournissant chacun un signal indiquant des variations dans un champ magnétique induit par la micro-bobine génératrice (84) et détecté par les deux paires de bobines de détection (86, 88), dans lequel les signaux des deux canaux de sortie sont fournis dans un format numérique ou analogique et les signaux des deux canaux de sortie sont fournis à un microprocesseur configuré pour commander l'unité d'entraînement de moteur (42).

19. Ensemble d'entraînement modulaire (24) selon la revendication 18, dans lequel l'électronique d'interfaçage est configurée pour fournir une sortie indiquant une direction et une vitesse de rotation du rotor (72) après passage de deux de la pluralité de dents (75) par l'ensemble capteur d'inductance (80).

20. Ensemble d'entraînement modulaire (24) selon la revendication 19, dans lequel le rotor (72) a 102 dents (75) montées autour d'une périphérie ayant un diamètre d'environ 70 millimètres et chaque dent a un pas d'environ 2,16 millimètres.

21. Ensemble d'entraînement modulaire (24) selon la revendication 19, dans lequel la pluralité de signaux de sortie ont une périodicité identique à la pluralité de dents (75) du rotor (72).

22. Ensemble d'entraînement modulaire (24) selon la revendication 19, dans lequel une hauteur du boîtier d'unité d'entraînement de moteur de l'unité d'entraînement de moteur (42), contenant le premier arbre (68) et le second arbre (100) n'est pas supérieure à une dimension correspondante d'un boîtier de moteur (60).
